(19) Europäisches Patentamt / European Patent Office / Office européen des brevets

(11) **EP 2 158 456 B1**

(12) **EUROPÄISCHE PATENTSCHRIFT**

(45) Veröffentlichungstag und Bekanntmachung des Hinweises auf die Patenterteilung:
**04.04.2018 Patentblatt 2018/14**

(21) Anmeldenummer: **08760778.4**

(22) Anmeldetag: **10.06.2008**

(51) Int Cl.:
*G01F 1/66* (2006.01)    *G01F 15/00* (2006.01)
*G01F 15/14* (2006.01)    *G10K 11/24* (2006.01)
*G21C 17/032* (2006.01)

(86) Internationale Anmeldenummer:
**PCT/EP2008/057218**

(87) Internationale Veröffentlichungsnummer:
**WO 2008/152031 (18.12.2008 Gazette 2008/51)**

(54) **ULTRASCHALLSENSOR ZUR MESSUNG VON STRÖMUNGSGESCHWINDIGKEITEN IN FLÜSSIGEN SCHMELZEN**

ULTRASONIC SENSOR FOR MEASURING FLOW RATES IN LIQUID MELTS

CAPTEUR À ULTRASONS DESTINÉ À MESURER DES VITESSES D'ÉCOULEMENT DANS DES SUBSTANCES FONDUES FLUIDES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **11.06.2007   DE 102007027391**

(43) Veröffentlichungstag der Anmeldung:
**03.03.2010   Patentblatt 2010/09**

(73) Patentinhaber: **Helmholtz-Zentrum Dresden - Rossendorf e.V.**
**01328 Dresden (DE)**

(72) Erfinder:
• **ECKERT, Sven**
  **01259 Dresden (DE)**
• **GERBETH, Gunter**
  **01328 Dresden (DE)**
• **GUNDRUM, Thomas**
  **01454 Ullersdorf (DE)**

(56) Entgegenhaltungen:
DE-A1- 10 055 956    DE-A1- 10 153 297
DE-A1- 19 934 876    US-A- 4 287 755
US-A- 4 662 215      US-A- 4 914 959
US-A- 5 708 209      US-A1- 2006 260 929

**Beschreibung**

Die Erfindung betrifft einen Ultraschallsensor zur Messung von Strömungsgeschwindigkeiten in flüssigen Schmelzen bei hohen Temperaturen, bestehend aus einem Ultraschallwellenleiter, einem piezoelektrischen Wandler und einer elektrischen Schaltung zur Signalanpassung.

Im Gegensatz zu den in der Strömungsmechanik weit verbreiteten optischen Messverfahren sind Ultraschallmessverfahren prinzipiell auch für einen Einsatz in nichttransparenten Fluiden geeignet. Die wesentliche Komponente der Messapparatur ist der Ultraschallwandler in Form eines piezoelektrischen Schwingers (auch Piezokristall oder piezoelektrischer Wandler genannt), der elektrisch mit einem Frequenzgenerator und einem Auswertegerät verbunden ist. Die Übertragung der Ultraschallwellen in das zu untersuchende Fluid erfolgt vom Ultraschallwandler direkt in das Fluid oder über die Außenwand des das Fluid umschließenden Behälters.

Weit verbreitet sind Ultraschall-Durchflussmessgeräte zur Bestimmung des Durchsatzes strömender Medien in Rohren oder Rinnen. Die DE 198 12 458 C2 beschreibt einen Sende- und/oder Empfangskopf für einen Ultraschall-Durchflussmesser nach dem Laufzeit-Verfahren, der sich durch die Verwendung eines Ultraschallwellenleiters mit großem Wärmeleitwiderstand auszeichnet. Die Nutzung eines Ultraschallwellenleiters zur Übertragung von Ultraschallsignalen ermöglicht eine räumliche Trennung von heißer Schmelze und piezoelektrischem Wandler. Die Verwendung von Materialien mit einem hohen Wärmeleitwiderstand zur Konstruktion des Ultraschallwellenleiters ist geeignet, die Temperatur am piezoelektrischen Wandler bei praktikabler Länge des Ultraschallwellenleiters zu begrenzen.

Neben den Methoden zur Durchflussmessung mittels Ultraschall wurde auch das Ultraschall-Doppler-Verfahren zur Messung von Geschwindigkeitsprofilen in technischen Strömungen entwickelt (Y. Takeda: Development of an ultrasound velocity profile monitor. Nucl. Eng. Design, Vol. 126, 1991, 277-284). Beim Ultraschall-Doppler-Verfahren werden Ultraschallmesssignale mit einer vorgegebenen Frequenz in die Strömung eingekoppelt. Die im Medium enthaltenen kleinsten Partikel reflektieren die Ultraschallmesssignale, und anhand der Frequenzverschiebung der ein- und ausgekoppelten Ultraschallmesssignale lässt sich die Strömungsgeschwindigkeit bestimmen.

Die Anwendung eines Ultraschallsensors mit integriertem Ultraschallwellenleiter beim Ultraschall-Doppler-Verfahren bedingt eine dispersionsfreie Übertragung der Ultraschallwellen im Ultraschallwellenleiter. Damit ergeben sich an den Aufbau des Ultraschallwellenleiters spezielle Anforderungen. So muss die Materialstärke der die Ultraschallwellen tragenden Struktur quer zur Übertragungsrichtung geringer als die minimale Wellenlänge des zu übertragenden Ultraschallsignals sein. Es sind verschiedene Konzepte zur Konstruktion entsprechender Ultraschallwellenleiter bekannt.

In der WO 96/41 157 wird die Verwendung eines Bündels dünner, zueinander paralleler Stäbe oder eine konzentrische Anordnung von Röhren mit entsprechend abgestuften Durchmessern vorgeschlagen, um eine dispersionsfreie Signalübertragung zu erreichen.

Die DE 100 21 187 C1 beschreibt den Aufbau eines Ultraschallwellenleiters aus einer zusammengerollten Folie, deren Schichtdicke kleiner als die kleinste Wellenlänge des Ultraschalls im Ultraschallwellenleitermaterial gewählt wird. Damit wird eine weitgehend störungsfreie Ausbreitung des Ultraschallsignals im Ultraschallwellenleiter erreicht.

Die DE 100 53 508 A1 beschreibt das stirnseitige Verschließen eines aus einer Folie gewickelten Ultraschallwellenleiters mittels geeigneter Scheiben, um eine bessere Ankopplung mit hoher Energieübertragung zu erreichen.

Damit erfüllen die bisher vorgeschlagenen technischen Lösungen die folgenden beiden Kriterien:

Ein Ultraschallwellenleiter endlicher Länge aus einem Material mit hinreichend geringer Wärmeleitfähigkeit verhindert eine Überhitzung des piezoelektrischen Wandlers, welcher an der der Messumgebung abgewandten Seite angeordnet ist.

Ein Aufbau des Ultraschallwellenleiters aus hinreichend dünnen Strukturen minimiert Übertragungsverluste, die durch Streuung und Dispersion des Ultraschalls im Ultraschallwellenleiter verursacht werden.

Die US 2006/260929 A1 beschreibt einen Ultraschallwandler für Flüssigmetalle mit einem Ultraschalloszillator und einem Schwingungsübertragungsabschnitt, wobei ein zur Kontaktierung mit dem Flüssigmetall vorgesehener Endabschnitt des Schwingungsübertragungsabschnitts aus ferritischem rostfreiem Stahl besteht.

Die US 5 708 209 A beschreibt eine Vorrichtung zum Einkoppeln von Ultraschallwellen in eine Schmelze zum Erfassen von Partikeln innerhalb der Schmelze.

Die US 4 662 215 A beschreibt eine Sonde zum Übertragen von Ultraschallwellen zwischen einem Wandler und einem Schmelzkörper, aufweisend eine Umhüllung, ein Koppelungsmedium zum Übertragen von Ultraschallwellen, und ein Fenster zum Übertragen von Ultraschallwellen zwischen dem Koppelungsmedium und dem Schmelzkörper.

Der Erfindung liegt die Aufgabe zugrunde, einen Ultraschallsensor zur Durchführung lokaler kontinuierlicher und zuverlässiger Geschwindigkeitsmessungen in heißen Schmelzen (T > 200°C) zu entwickeln.

Die Erfindung betrifft einen Ultraschallsensor gemäß Anspruch 1, Ausführungsformen ergeben sich aus den abhängigen Ansprüchen.

Die Aufgabe wird erfindungsgemäß bei einem Ultraschallsensor der eingangs genannten Art dadurch gelöst, dass der mit dem piezoelektrischen Wandler verbundene Ultraschallwellenleiter aus einem Material besteht, das in einem für den Einsatzfall relevanten Temperaturbereich oberhalb von 200 °C eine geringe akustische Dämpfung aufweist, sowie gegenüber der Schmelze chemisch resistent ist und dass die der Schmelze zugewandte Stirnfläche des Ultraschallwellenleiters verschlossen und von der Schmelze benetzbar ist.

Das Material geringer akustischer Dämpfung weist einen akustischen Schwächungskoeffizienten von $\alpha < 10$ dB/m auf.

Der Ultraschallwellenleiter kann aus den Metallen Iridium, Molybdän, Niob, Tantal, Wolfram, Zirkonium, Edelstahl, Titan, Monel oder einer Legierung oder Kombination der genannten Metalle bestehen.

Der Ultraschallwellenleiter besteht aus einer Vielzahl flächig übereinander geschichteter Folien, wobei die Ausbreitungsrichtung des Ultraschalls senkrecht zur Flächennormalen vorgesehen ist. Bevorzugt besteht der Ultraschallwellenleiter aus übereinander geschichteten Metallfolien.

Alternativ kann der Ultraschallwellenleiter aus einer Materialkombination von Metallen und Keramik und/oder einem Glaswerkstoff bestehen.

Die Länge des Ultraschallwellenleiters beträgt zwischen 100 mm und 1000 mm.

In Fortführung der Erfindung ist der Schutzmantel gegenüber der Schmelze chemisch beständig ausgeführt und kann zusätzlich mit einer Temperaturisolation versehen sein.

Weiterhin kann zwischen Ultraschallwellenleiter und Schutzmantel ein Zwischenraum vorgesehen sein oder der Schutzmantel doppelwandig ausgeführt sein, der von einem Kühlmittel durchströmbar ist.

In einer weiteren Ausgestaltung der Erfindung ist der der Schmelze abgewandte Teil des Ultraschallsensors mit piezoelektrischem Wandler und elektrischen Komponenten von einem Schutzgehäuse umgeben. Das Schutzgehäuse ist vorteilhaft doppelwandig ausgeführt und der Zwischenraum von einem Kühlmittel durchströmbar.

Für eine gute Einkopplung der Ultraschallenergie in die Schmelze ist die der Schmelze zugewandte Stirnfläche des Ultraschallwellenleiters mechanisch und/oder chemisch von Schmutz und Oxiden befreit und kann zusätzlich mit einer glatten Schutzschicht versehen sein.

Zusätzlich oder alternativ kann eine zusätzliche glatte Deckplatte oder Folie auf der Stirnseite des Ultraschallwellenleiters angebracht sein, wobei der Ultraschallwellenleiter und Deckplatte oder Folie aus unterschiedlichen Materialien bestehen können.

Schließlich ist vorgesehen, dass die Deckplatte mit einer dünnen glatten Materialschicht versehen ist, die mittels Ionenimplantation oder elektrochemischen oder physikalischen Verfahren aufgetragen ist.

Eine weitere Ausgestaltung der Erfindung ist dadurch gekennzeichnet, dass der Ultraschallwellenleiter und der piezoelektrische Wandler unmittelbar hintereinander angeordnet sind und mittels Kleben, Löten oder Anpressen miteinander verbunden sind. Weiterhin ist der piezoelektrische Wandler durch Kondensatoren und/oder Spulen mit einem außerhalb des Ultraschallsensors befindlichen Auswertegerät verschaltet.

Für die elektrische Signalübertragung zwischen dem piezoelektrischen Wandler und dem Auswertegerät sind symmetrisch verdrillte Leiter vorgesehen und zwischen dem piezoelektrischen Wandler und dem Auswertegerät eine galvanische Trennung eingebaut.

Um eine Reduzierung des Ableitstromes zu erreichen, ist eine stromkompensierte Drossel zwischen Schmelze und Auswertegerät eingebaut.

Die Erfindung wird nachstehend an einem Ausführungsbeispiel näher beschrieben. In den zugehörigen Zeichnungen zeigen

Fig. 1:     eine schematische Ansicht des Ultraschallsensors und

Fig. 2:     eine spezielle Ausführung eines Ultraschallwellenleiters bestehend aus einer Vielzahl übereinander geschichteter Einzelfolien.

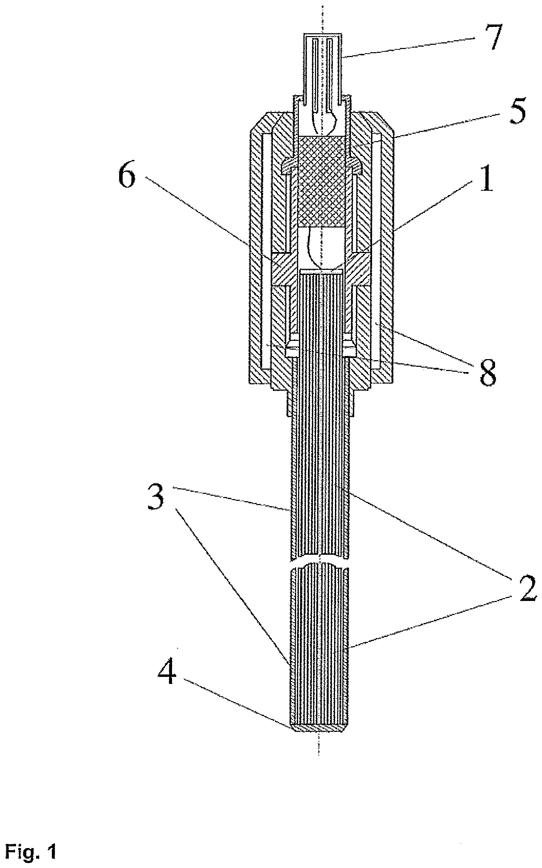

In Fig. 1 ist der prinzipielle Aufbau eines erfindungsgemäßen Ultraschallsensors dargestellt, der nach dem Ultraschall-Doppler-Verfahren arbeitet. Damit ist gewährleistet, dass nur ein Sensor für die Bestimmung der Geschwindigkeit der strömenden Schmelze notwendig ist. Das Eintauchen des Sensors in eine Schmelze muss unter einem Winkel erfolgen, der von 90° verschieden ist. Die Benutzung von zwei oder mehreren Ultraschallsensoren ist möglich.

Der erfindungsgemäße Ultraschallsensor besteht aus den Hauptbaugruppen piezoelektrischer Wandler 1 mit zugehörigen elektronischen Komponenten 5 zur Steuerung des Wandlers 1 und zur internen Aufbereitung, Anpassung und Auswertung der Signale und einem angekoppelten Ultraschallwellenleiter 2 in axialer Anordnung. Der piezoelektrische Wandler 1 befindet sich dabei auf der der Strömung abgewandten Seite des Ultraschallwellenleiters 2. Der Ultraschallwellenleiter 2 ist von einem Schutzmantel 3 umgeben.

Das Ausgangssignal liegt an einer Anschlussbuchse 7 an, die sich axial hinter den elektronischen Komponenten 5 befindet und kann somit über ein Kabel an ein außerhalb des Sensors befindliches nicht dargestelltes Auswertegerät übertragen werden.

Der piezoelektrische Wandler 1 und die elektrischen Komponenten 5 für die Signalanpassung 5 sind in einem Schutzgehäuse 6 untergebracht.

Sämtliche Sensorkomponenten innerhalb des Schutzgehäuses 6 müssen dauerhaft auf einem Temperaturniveau kleiner als 100°C gehalten werden. Bei entsprechender thermischer Belastung kann das Schutzgehäuse 6 doppelwandig ausgeführt werden, wobei der Zwischenraum 8 des Schutzgehäuses 6 über entsprechende Anschlüsse mit einem Kühlmittelreservoir verbunden und während der Messung von einem Kühlmittel durchströmt werden kann.

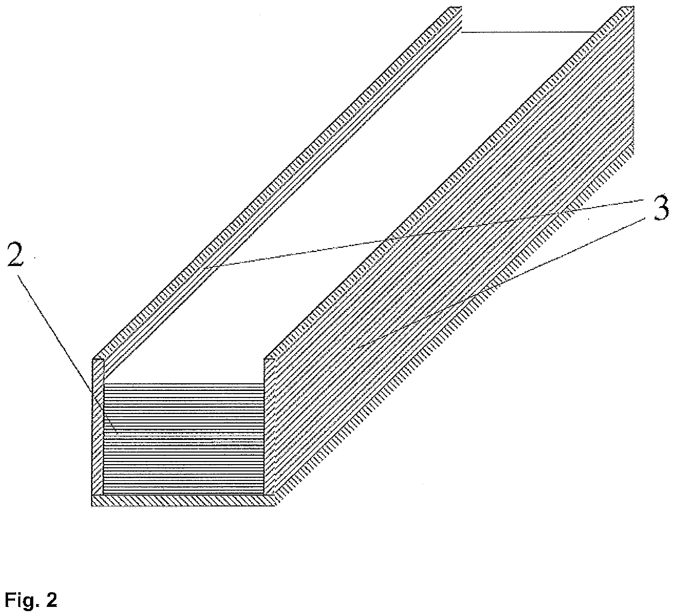

Eine spezielle Ausgestaltung des Ultraschallwellenleiters 2, bestehend aus einer Vielzahl flächig übereinander geschichteter Metallfolien, ist in Fig. 2 zu sehen. Die Ausbreitungsrichtung des Ultraschalls verläuft senkrecht zur Flächennormalen der Einzelfolien. Die einzelnen Folienlagen besitzen beispielsweise eine Abmessung von jeweils 5x300 mm$^2$ bei einer Dicke von jeweils 75 $\mu$m.

Der Ultraschallwellenleiter 2 ist mit einem Schutzmantel 3 versehen, dessen Form dem Querschnitt des Ultraschallwellenleiters 2 angepasst ist. Für die Gewährleistung der Funktion des Ultraschallwellenleiters 2 kann die der Schmelze zugewandte Stirnseite des Schutzmantels 3 des Ultraschallwellenleiters 2 mit einer Deckplatte 4 verschlossen sein (Fig. 1).

Zwischen der Deckplatte 4 und den Folienlagen des Ultraschallwellenleiters 2 besteht eine homogene Materialverbindung. Es ist nicht erforderlich, dass Ultraschallwellenleiter 2, Schutzmantel 3 und Deckplatte 4 aus demselben Material bestehen.

Für einen Einsatz in einer Zinnschmelze bei etwa 1000°C kann der Ultraschallwellenleiter 2 zum Beispiel aus einer Molybdänfolie gefertigt sein, die sich in einem Edelstahlrohr befindet, welches an der vorderen Stirnseite mit einer Edelstahldeckplatte 4 verschlossen ist. Um eine für einen guten akustischen Übergang ausreichende Benetzung zwischen Ultraschallsensor und Zinnschmelze herzustellen, wird die Oberfläche der Edelstahldeckplatte 4 mechanisch poliert und anschließend mit Phosphorsäure behandelt. Auf der gereinigten Oberfläche wird nachfolgend elektrolytisch Zinn abgeschieden.

Der Einsatzbereich eines piezoelektrischen Wandlers wird durch dessen Curie-Temperatur begrenzt. Wird diese Temperaturschwelle überschritten, verliert das Wandlermaterial seine piezoelektrischen Eigenschaften. Die Schmelztemperatur einer Vielzahl kommerziell interessanter Metalle, Halbleiter oder Gläser liegt deutlich oberhalb der Curie-Temperatur gebräuchlicher Piezokeramiken.

Eine Anwendung des Ultraschall-Doppler-Verfahrens in diesen Schmelzen erfordert eine technische Lösung, die einen stabilen, akustischen Kontakt zwischen Ultraschallwandler und Fluid herstellt und gleichzeitig den piezoelektrischen Wandler vor der Einwirkung der zu untersuchenden Schmelze schützt.

Noch stärker als bei den Verfahren der Ultraschall-Durchflussmessung ist beim Ultraschall-Doppler-Verfahren eine möglichst verlustarme Übertragung hochfrequenter Ultraschallsignale erforderlich, um verwertbare Messdaten zu gewinnen. Infolge der hohen Temperaturen der zu untersuchenden Schmelzen ist ein Ultraschallwellenleiter in das Messkonzept integriert. Hiermit sind allerdings nicht zu vermeidende Übertragungsverluste verbunden.

Zusätzliche Verluste ergeben sich bei der Durchschallung von Gefäßwänden, wobei sich insbesondere die Struktur des Wandmaterials von Behältern zur Aufbewahrung heißer Schmelzen oft durch äußerst schlechte Übertragungseigenschaften für den Ultraschall auszeichnet. Daraus ergibt sich die Notwendigkeit einer direkten Ankopplung des Sensors an die zu messende Strömung unmittelbar in der Schmelze. Die hohen Anwendungstemperaturen sowie der direkte Kontakt mit der Schmelze über den Ultraschallwellenleiter stellen besondere Anforderungen an die Ausführung des Sensors, insbesondere des Ultraschallwellenleitermaterials hinsichtlich seiner physikalischen Eigenschaften sowie seiner chemischen Stabilität bzw. Löslichkeit in der Schmelze.

Es ist bekannt, dass jede Schallausbreitung von Verlusten begleitet wird, da sich kontinuierlich ein Teil der mechanischen Energie der fortlaufenden Schallwelle in Wärme umwandelt. Dieser Vorgang wird als Schallabsorption bezeichnet und ist durch den Absorptionskoeffizienten $\alpha$ charakterisiert, welcher eine exponentielle Abnahme des Schalldrucks $p$ einer ebenen, harmonischen Schallwelle entlang einer Strecke $x$ beschreibt (H. Kuttruff: Physik und Technik des Ultraschalls. Hirzel Verlag Stuttgart, 1988, 191 ff.):

$$p(x) = p_0\, e^{-ax}$$

Der Absorptionskoeffizient $\alpha$ hängt vom Übertragungsmaterial und der Frequenz der Ultraschallwelle ab und wird durch die Beiträge verschiedener Verlustmechanismen bestimmt, die von der Wechselwirkung der sich ausbreitenden Welle mit der atomaren Struktur des Übertragungsmediums herrühren. Anteile des Absorptionskoeffizienten, die auf Schallabsorption durch Kristallbaufehler, Streuung an thermischen Phononen oder ähnliche Vorgänge zurückzuführen sind, wachsen mit steigender Temperatur an. Ein Anstieg der Temperatur über Werte von beispielsweise 400°C bringt für viele Materialien bereits einen messbaren Anstieg der akustischen Dämpfung mit sich.

Bei Temperaturen oberhalb 700°C ist eine derart drastische Zunahme der Übertragungsverluste zu beobachten, dass eine sinnvolle Nutzung des betreffenden Materials als Ultraschallwellenleiter auszuschließen ist. Für diese speziellen Anwendungen kommen damit nur noch eine geringe Anzahl, sorgfältig auszuwählender Ultraschallwellenleitermaterialien in Betracht. Die Tauglichkeit verschiedener Materialien im Hinblick auf ihr akustisches Dämpfungsverhalten bei hohen Temperaturen wurde in umfangreichen Versuchsreihen überprüft.

Es hat sich gezeigt, dass Iridium, Molybdän, Niob, Tantal, Wolfram, Zirkonium, Edelstahl, Titan, Monel oder Legierungen dieser Materialien im Bereich hoher Temperaturen (T > 200°C) entsprechende, für das Ultraschall-Doppler-Verfahren ausreichende Übertragungseigenschaften für den Ultraschall aufweisen.

Eine wesentliche Bedingung besteht in einer ausreichenden Benetzung der Stirnfläche des Ultraschallwellenleiters, um eine gute akustische Ankopplung an die Schmelze sicherzustellen. Es hat sich gezeigt, dass im Falle einer Nichtbenetzung des Ultraschallwellenleiters durch die Schmelze nur ein verschwindend geringer Teil der Ultraschallenergie in das Fluid eingekoppelt werden kann und dadurch kein verwertbares Messsignal entsteht.

Gemäß der Erfindung sind verschiedene mechanische und chemische Bearbeitungsverfahren für die Stirnfläche des Ultraschallwellenleiters vorgesehen, um eine Benetzung zwischen Ultraschallwellenleitermaterial und Schmelze zu erreichen. Die Anzahl und Abfolge der einzelnen Bearbeitungsschritte hängt jeweils von der Art der betrachteten Schmelze, dem Material des Ultraschallwellenleiters und dem Temperaturbereich ab, in dem die Messungen durchgeführt werden sollen.

Eine wesentliche Voraussetzung für eine Benetzung ist die Entfernung von Verschmutzungen, Ablagerungen und Oxidschichten auf der Stirnfläche der Deckplatte 4 des Ultraschallwellenleiters 2. Dies kann mechanisch, z. B. durch Schleifen und Polieren, und/oder chemisch durch eine zeitlich begrenzte Einwirkung geeigneter Chemikalien, z. B. anorganische Säuren oder geeignete Flussmittel, erfolgen.

Im Zeitraum zwischen dieser Präparation und dem Messeinsatz muss die Deckplatte 4 des Ultraschallwellenleiters 2 in geeigneter Weise vor erneuter Oxidation und/oder Verschmutzung geschützt werden. Dies kann durch eine geeignete Schutzschicht, z.B. aus einem Metall realisiert werden, die mechanisch und/oder thermisch auf die Stirnfläche der Deckplatte 4 aufgetragen worden ist. Diese Schutzschicht muss sich während der Messung in der Schmelze innerhalb eines vorgegebenen Zeitraumes auflösen, so dass dann der direkte Kontakt zwischen Schmelze und der präparierten Stirnfläche der Deckplatte 4 erreicht wird.

Bei einigen Materialpaarungen wird das Ultraschallwellenleitermaterial selbst bei ideal gesäuberter Oberfläche grundsätzlich nicht oder nur oberhalb einer bestimmten Temperatur benetzt. Für diese Anwendungsfälle ist es notwendig, dass die Stirnseite der Deckplatte 4 mit einer Schicht eines Materials bedeckt wird, das von der Schmelze in dem für die Messung vorgesehenen Temperaturbereich gut benetzt wird. Zwischen dieser Schicht und dem Ultraschallwellenleiter muss eine homogene Materialverbindung existieren. Die zusätzliche Deckschicht kann durch das Anbringen einer Scheibe oder Folie auf der Deckplatte 4, oder durch elektrochemische Abscheideverfahren realisiert werden.

Eine weitere Möglichkeit besteht in einer Modifikation der oberflächennahen Struktur des Ultraschallwellenleiters durch Ionenimplantation oder ähnliche physikalische Verfahren.

Eine weitere Voraussetzung für die Anwendung eines Sensors mit Ultraschallwellenleiter für das Ultraschall-Doppler-Verfahren ist die dispersionsfreie Übertragung der Ultraschallwelle im Ultraschallwellenleiter. Um dies zu erreichen, wird der Ultraschallwellenleiter aus einer dünnen Struktur aufgebaut. Dies bringt in der Regel eine nur unvollständige Ausfüllung des Querschnitts mit Material mit sich. Sollte bei einem Eintauchen des Ultraschallwellenleiters in die Schmelze dieselbe entlang der Hohlräume in die innere Struktur des Ultraschallwellenleiters vordringen, ist eine störungsfreie, dämpfungsarme Übertragung nicht mehr gewährleistet.

Um dies zu verhindern, ist die der Schmelze zugewandte Stirnfläche des Ultraschallwellenleiters 2 mit der bereits erwähnten Deckplatte 4 verschlossen und kann zusätzlich noch mit einer Deckplatte ausgeführt sein.

Der piezoelektrische Wandler sowie die zum Zweck der Signalanpassung nach geschalteten elektronischen Bauelemente können in der Regel dauerhaft Temperaturen bis maximal 100°C ausgesetzt werden. In Abhängigkeit von der konkreten Anwendung kann es daher erforderlich werden, diese temperaturempfindlichen Sensorkomponenten zusätzlich zu kühlen. Zu diesem Zweck ist es beispielsweise sinnvoll, die entsprechenden Komponenten in einem Schutzgehäuse 6 mit einem doppelwandigen Schutzmantel 8 unterzubringen, dessen Hohlraum während des Einsatzes von einem Kühlmittel durchströmt wird.

Die Signalqualität bei Geschwindigkeitsmessungen mittels Ultraschall-Doppler-Verfahren kann durch eine geeignete elektrische Anpassung des piezoelektrischen Wandlers an das Auswertegerät deutlich verbessert werden. Diese Anpassung wird in der vorliegenden Erfindung unter Verwendung einer entsprechend dimensionierten Schaltung von Kondensatoren und/oder Spulen realisiert. In der Regel sollte die Impedanz des piezoelektrischen Wandlers 1 unter dem Wellenwiderstand des zum Signaltransport verwendeten Kabels liegen, so dass bei einer Impedanz-Transformation mit Hilfe von Spulen und Kondensatoren Ultraschallfelder mit signifikant höherer Intensität übertragen werden.

Die zu untersuchenden Schmelzen werden oft mit Induktionsheizungen oder elektrischen Heizungen mit Thyristorstellern erwärmt und aufgeschmolzen. Das führt zur Induktion von elektrischen Strömen direkt in der Schmelze oder auch im Ultraschallwellenleiter 2. Der Einsatz von elektromagnetischen Pumpen oder Magnetfeldsystemen zur Strömungsbeeinflussung ist eine weitere Quelle für elektrische Störsignale, die Oberwellen hervorrufen können und damit das Messergebnis beeinträchtigen.

Die vorliegende Erfindung verwendet einen speziellen, elektrischen Aufbau aus Übertragern, stromkompensierten Drosseln und verdrillten Signalleitungen zum Zweck einer wirkungsvollen Reduzierung dieser elektrischen Störungen.

**Bezugszeichenliste**

1    piezoelektrischer Wandler
2    Ultraschallwellenleiter
3    Schutzmantel
4    Deckplatte
5    Elektrische Schaltung von Steuer- und ggf. internem Auswerteteil
6    Schutzgehäuse
7    Anschlussbuchse
8    Zwischenraum / hohlwandige Ausführung des Schutzmantels

**Patentansprüche**

1. Ultraschallsensor zum Messen von Strömungsgeschwindigkeiten in flüssigen Schmelzen, bestehend aus einem Ultraschallwellenleiter (2), einem piezoelektrischen Wandler (1), und einer elektrischen Schaltung (5) zur Signalanpassung, wobei der mit dem piezoelektrischen Wandler (1) verbundene Ultraschallwellenleiter (2) aus einem Material besteht, das in einem für den Einsatzfall relevanten Temperaturbereich oberhalb von 200 °C eine geringe akustische Dämpfung mit einem akustischen Schwächungskoeffizienten $\alpha < 10$ dB/m aufweist sowie gegenüber der Schmelze chemisch resistent ist, und wobei die der Schmelze zugewandte Stirnfläche des Ultraschallwellenleiters (2) verschlossen und von der Schmelze benetzbar ist, **dadurch gekennzeichnet, dass** der Ultraschallwellenleiter (2) aus einer Vielzahl flächig übereinander geschichteter Folien besteht, wobei die Ausbreitungsrichtung des Ultraschalls senkrecht zur Flächennormalen vorgesehen ist.

2. Ultraschallsensor nach Anspruch 1, **dadurch gekennzeichnet, dass** der Ultraschallwellenleiter (2) aus den Metallen Iridium, Molybdän, Niob, Tantal, Wolfram, Zirkonium, Edelstahl, Titan, Monel oder einer Legierung oder Kombination der genannten Metalle besteht.

3. Ultraschallsensor nach Anspruch 1 oder 2, **dadurch gekennzeichnet, dass** der Ultraschallwellenleiter (2) aus übereinander geschichteten Metallfolien besteht.

4. Ultraschallsensor nach Anspruch 1 oder 2, **dadurch gekennzeichnet, dass** der Ultraschallwellenleiter (2) aus einer Materialkombination von Metallen und Keramik und/oder einem Glaswerkstoff besteht.

5. Ultraschallsensor nach einem der Ansprüche 1 bis 4, **dadurch gekennzeichnet, dass** die Länge des Ultraschallwellenleiters (2) zwischen 100 mm und 1000 mm beträgt.

6. Ultraschallsensor nach mindestens einem der vorhergehenden Ansprüche, **dadurch gekennzeichnet, dass** der Ultraschallsensor einen Schutzmantel (3) aufweist, der gegenüber der Schmelze chemisch beständig ist.

7. Ultraschallsensor nach mindestens einem der vorhergehenden Ansprüche, **dadurch gekennzeichnet, dass** der Ultraschallsensor einen Schutzmantel (3) aufweist, der mit einer Temperaturisolation versehen ist.

8. Ultraschallsensor nach Anspruch 7, **dadurch gekennzeichnet, dass** zwischen dem Ultraschallwellenleiter (2) und dem Schutzmantel (3) ein Zwischenraum vorgesehen ist, der von einem Kühlmittel durchströmbar ist.

9. Ultraschallsensor nach Anspruch 7 oder 8, **dadurch gekennzeichnet, dass** der Schutzmantel (3) doppelwandig ausgeführt ist und von einem Kühlmittel durchströmbar ist.

10. Ultraschallsensor nach Anspruch 1, **dadurch gekennzeichnet, dass** der der Schmelze abgewandte Teil des Ultraschallsensors mit dem piezoelektrischen Wandler (1) und der elektrischen Schaltung (5) von einem Schutzgehäuse (6) umgeben ist.

11. Ultraschallsensor nach Anspruch 10, **dadurch gekennzeichnet, dass** das Schutzgehäuse (6) doppelwandig ausgeführt ist und der Zwischenraum (8) von einem Kühlmittel durchströmbar ist.

12. Ultraschallsensor nach Anspruch 1, **dadurch gekennzeichnet, dass** die der Schmelze zugewandte Stirnfläche des Ultraschallwellenleiters (2) mechanisch und/oder chemisch von Schmutz und Oxiden befreit ist.

13. Ultraschallsensor nach Anspruch 1, **dadurch gekennzeichnet, dass** die Stirnfläche des Ultraschallwellenleiters (2) mit einer glatten Schutzschicht versehen ist.

14. Ultraschallsensor nach Anspruch 1, **dadurch gekennzeichnet, dass** eine zusätzliche glatte Deckplatte (4) oder Folie auf der Stirnseite des Ultraschallwellenleiters (2) angebracht ist.

15. Ultraschallsensor nach Anspruch 14, **dadurch gekennzeichnet, dass** der Ultraschallwellenleiter (2) und die Deckplatte oder die Folie aus unterschiedlichen Materialien bestehen.

16. Ultraschallsensor nach Anspruch 14, **dadurch gekennzeichnet, dass** die Deckplatte (4) mit einer dünnen glatten Materialschicht versehen ist, die mittels Ionenimplantation oder elektrochemischen oder physikalischen Verfahren aufgetragen ist.

**17.** Ultraschallsensor nach Anspruch 1, **dadurch gekennzeichnet**, das der Ultraschallwellenleiter (2) und der piezoelektrische Wandler (1) unmittelbar hintereinander angeordnet sind und mittels Kleben, Löten oder Anpressen miteinander verbunden sind.

**18.** Ultraschallsensor nach Anspruch 1, **dadurch gekennzeichnet, dass** der piezoelektrische Wandler (1) durch Kondensatoren und/oder Spulen mit einem außerhalb des Ultraschallsensors befindlichen Auswertegerät verschaltet ist.

**19.** Ultraschallsensor nach Anspruch 18, **dadurch gekennzeichnet, dass** für die elektrische Signalübertragung zwischen dem piezoelektrischen Wandler (1) und dem Auswertegerät symmetrisch verdrillte Leiter vorgesehen sind.

**20.** Ultraschallsensor nach Anspruch 18, **dadurch gekennzeichnet, dass** zwischen dem piezoelektrischen Wandler (1) und dem Auswertegerät eine galvanische Trennung eingebaut ist.

**21.** Ultraschallsensor nach Anspruch 18, **dadurch gekennzeichnet, dass** zur Reduzierung des Ableitstromes eine stromkompensierte Drossel zwischen der flüssigen Schmelze und dem Auswertegerät eingebaut ist.

**Claims**

**1.** Ultrasonic sensor for measuring flow rates in liquid melts, said sensor consisting of an ultrasonic waveguide (2), a piezoelectric transducer (1) and an electrical signal matching circuit (5), wherein the ultrasonic waveguide (2) which is connected to the piezoelectric transducer (1) is composed of a material which has low acoustic attenuation having an acoustic attenuation coefficient of $\alpha < 10$ dB/m in a temperature range above 200°C, which is relevant to the application, and is chemically resistant to the melt, and wherein that end face of the ultrasonic waveguide (2) which faces the melt is closed and can be wetted by the melt, **characterized in that** the ultrasonic waveguide (2) consists of a multiplicity of films which are layered on top of one another in a two-dimensional manner, the propagation direction of the ultrasound being perpendicular to the surface normal.

**2.** Ultrasonic sensor according to Claim 1, **characterized in that** the ultrasonic waveguide (2) is composed of the metals iridium, molybdenum, niobium, tantalum, tungsten, zirconium, stainless steel, titanium, Monel or an alloy or combination of said metals.

**3.** Ultrasonic sensor according to Claim 1 or 2, **characterized in that** the ultrasonic waveguide (2) consists of metal films which are layered on top of one another.

**4.** Ultrasonic sensor according to Claim 1 or 2, **characterized in that** the ultrasonic waveguide (2) is composed of a material combination of metals and ceramic and/or a glass material.

**5.** Ultrasonic sensor according to one of Claims 1 to 4, **characterized in that** the length of the ultrasonic waveguide (2) is between 100 mm and 1000 mm.

**6.** Ultrasonic sensor according to at least one of the preceding claims, **characterized in that** the ultrasonic sensor has a protective sheath (3) which is chemically resistant to the melt.

**7.** Ultrasonic sensor according to at least one of the preceding claims, **characterized in that** the ultrasonic sensor has a protective sheath (3) which is provided with thermal insulation.

**8.** Ultrasonic sensor according to Claim 7, **characterized in that** an intermediate space through which a coolant can flow is provided between the ultrasonic waveguide (2) and the protective sheath (3).

**9.** Ultrasonic sensor according to Claim 7 or 9, **characterized in that** the protective sheath (3) is of double-walled design and a coolant can flow through said protective sheath.

**10.** Ultrasonic sensor according to Claim 1, **characterized in that** that part of the ultrasonic sensor which faces away from the melt and has the piezoelectric transducer (1) and the electrical circuit (5) is surrounded by a protective housing (6).

**11.** Ultrasonic sensor according to Claim 10, **characterized in that** the protective housing (6) is of double-walled design, and a coolant can flow through the intermediate space (8).

**12.** Ultrasonic sensor according to Claim 1, **characterized in that** that end face of the ultrasonic waveguide (2) which faces the melt is mechanically and/or chemically freed of dirt and oxides.

**13.** Ultrasonic sensor according to Claim 1, **characterized in that** the end face of the ultrasonic waveguide (2) is provided with a smooth protective layer.

**14.** Ultrasonic sensor according to Claim 1, **characterized in that** an additional smooth cover plate (4) or film is fitted to the end of the ultrasonic waveguide (2).

**15.** Ultrasonic sensor according to Claim 14, **characterized in that** the ultrasonic waveguide (2) and the cover plate or the film are composed of different materials.

**16.** Ultrasonic sensor according to Claim 14, **characterized in that** the cover plate (4) is provided with a thin smooth material layer which is applied by means of ion implantation or electrochemical or physical methods.

**17.** Ultrasonic sensor according to Claim 1, **characterized in that** the ultrasonic waveguide (2) and the piezoelectric transducer (1) are arranged immediately behind one another and are connected to one another by means of adhesive bonding, soldering or pressing.

**18.** Ultrasonic sensor according to Claim 1, **characterized in that** the piezoelectric transducer (1) is connected to an evaluation device outside the ultrasonic sensor by means of capacitors and/or coils.

**19.** Ultrasonic sensor according to Claim 18, **characterized in that** symmetrically twisted conductors are provided for electrical signal transmission between the piezoelectric transducer (1) and the evaluation device.

**20.** Ultrasonic sensor according to Claim 18, **characterized in that** DC isolation is fitted between the piezoelectric transducer (1) and the evaluation device.

**21.** Ultrasonic sensor according to Claim 18, **characterized in that** a current-compensated inductor is fitted between the liquid melt and the evaluation device in order to reduce the leakage current.


**Revendications**

**1.** Capteur à ultrasons destiné à mesurer des vitesses d'écoulement dans des masses en fusion liquides, composé d'un guide d'ondes ultrasoniques (2), d'un transducteur piézoélectrique (1) et d'un circuit électrique (5) destiné à l'adaptation de signal, le guide d'ondes ultrasoniques (2) relié au transducteur piézoélectrique (1) étant constitué d'un matériau qui, dans une plage de températures au-dessus de 200 °C pertinente pour le cas d'utilisation, possède une faible atténuation acoustique avec un coefficient d'atténuation acoustique $\alpha$ < 10 dB/m et qui est chimiquement résistant à la masse en fusion, et la face frontale du guide d'ondes ultrasoniques (2) qui fait face à la masse en fusion étant fermée et pouvant être réticulée par la masse en fusion, **caractérisé en ce que** le guide d'ondes ultrasoniques (2) se compose d'une pluralité de films empilés à plat les uns sur les autres, la direction de la propagation des ultrasons étant prévue perpendiculaire aux normales de la surface.

**2.** Capteur à ultrasons selon la revendication 1, **caractérisé en ce que** le guide d'ondes ultrasoniques (2) se compose des métaux iridium, molybdène, niobium, tantale, tungstène, zirconium, acier inoxydable, titane, monel ou d'un alliage ou une combinaison desdits métaux.

**3.** Capteur à ultrasons selon la revendication 1 ou 2, **caractérisé en ce que** le guide d'ondes ultrasoniques (2) se compose de films métalliques empilés les uns sur les autres.

**4.** Capteur à ultrasons selon la revendication 1 ou 2, **caractérisé en ce que** le guide d'ondes ultrasoniques (2) est constitué d'une combinaison de matériaux comprenant des métaux et de la céramique et/ou d'un matériau en verre.

**5.** Capteur à ultrasons selon l'une des revendications 1 à 4, **caractérisé en ce que** la longueur du guide d'ondes ultrasoniques (2) est comprise entre 100 mm et 1000 mm.

**6.** Capteur à ultrasons selon au moins l'une des revendications précédentes, **caractérisé en ce que** le capteur à ultrasons possède une enveloppe de protection (3) qui est chimiquement résistante à la masse en fusion.

**7.** Capteur à ultrasons selon au moins l'une des revendications précédentes, **caractérisé en ce que** le capteur à ultrasons possède une enveloppe de protection (3) qui est pourvue d'une isolation thermique.

**8.** Capteur à ultrasons selon la revendication 7, **caractérisé en ce qu'**un espace intermédiaire qui peut être traversé par un courant de fluide réfrigérant est disposé entre le guide d'ondes ultrasoniques (2) et l'enveloppe de protection (3).

**9.** Capteur à ultrasons selon la revendication 7 ou 8, **caractérisé en ce que** l'enveloppe de protection (3) est réalisée à double paroi et peut être traversée par un courant de fluide réfrigérant.

**10.** Capteur à ultrasons selon la revendication 1, **caractérisé en ce que** la partie du capteur à ultrasons qui est à l'opposé de la masse en fusion, laquelle comprend le transducteur piézoélectrique (1) et le circuit électrique (5), est entourée d'un boîtier de protection (6).

**11.** Capteur à ultrasons selon la revendication 10, **caractérisé en ce que** le boîtier de protection (6) est réalisé à double paroi et l'espace intermédiaire (8) peut être traversé par un courant de fluide réfrigérant.

12. Capteur à ultrasons selon la revendication 1, **caractérisé en ce que** la face frontale du guide d'ondes ultrasoniques (2) qui est à l'opposé de la masse en fusion est débarrassée mécaniquement et/ou chimiquement d'impuretés et d'oxydes.

13. Capteur à ultrasons selon la revendication 1, **caractérisé en ce que** la face frontale du guide d'ondes ultrasoniques (2) est pourvue d'une couche de protection lisse.

14. Capteur à ultrasons selon la revendication 1, **caractérisé en ce qu'**une plaque de recouvrement lisse (4) supplémentaire ou un film est appliqué sur la face frontale du guide d'ondes ultrasoniques (2).

15. Capteur à ultrasons selon la revendication 14, **caractérisé en ce que** le guide d'ondes ultrasoniques (2) et la plaque de recouvrement ou le film sont constitués de matériaux différents.

16. Capteur à ultrasons selon la revendication 14, **caractérisé en ce que** la plaque de recouvrement (4) est pourvue d'une couche de matière lisse mince qui est appliquée au moyen d'une implantation ionique ou encore par un procédé électrochimique ou physique.

17. Capteur à ultrasons selon la revendication 1, **caractérisé en ce que** le guide d'ondes ultrasoniques (2) et le transducteur piézoélectrique (1) sont disposés directement l'un derrière l'autre et sont assemblés ensemble par collage, brasage ou pressage.

18. Capteur à ultrasons selon la revendication 1, **caractérisé en ce que** le transducteur piézoélectrique (1) est connecté par des condensateurs et/ou des bobines à un appareil d'interprétation qui se trouve à l'extérieur du capteur à ultrasons.

19. Capteur à ultrasons selon la revendication 18, **caractérisé en ce que** des conducteurs torsadés symétriques sont présents pour la transmission électrique de signal entre le transducteur piézoélectrique (1) et l'appareil d'interprétation.

20. Capteur à ultrasons selon la revendication 18, **caractérisé en ce qu'**une isolation galvanique est incorporée entre le transducteur piézoélectrique (1) et l'appareil d'interprétation.

21. Capteur à ultrasons selon la revendication 18, **caractérisé en ce qu'**une bobine à compensation du courant est incorporée entre la masse en fusion liquide et l'appareil d'interprétation afin de réduire le courant de fuite.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19812458 C2
- WO 9641157 A
- DE 10021187 C1
- DE 10053508 A1
- US 2006260929 A1
- US 5708209 A
- US 4662215 A

**In der Beschreibung aufgeführte Nicht-Patentliteratur**

- **Y. TAKEDA.** Development of an ultrasound velocity profile monitor. *Nucl. Eng. Design,* 1991, vol. 126, 277-284
- **H. KUTTRUFF.** Physik und Technik des Ultraschalls. Hirzel Verlag, 1988, 191 ff